# EUROPEAN PATENT APPLICATION

(11) **EP 4 794 107 A1**
(43) Date of publication of application: **19.08.2026**
(21) Application number: 26153403.6
(22) Date of filing: 22.01.2026
(51) Int. Cl.: H01M 50/536, H01M 50/54, H01M 10/0585, H01M 50/531

(54) **ELECTRODE ASSEMBLY AND SECONDARY BATTERY INCLUDING ELECTRODE ASSEMBLY**

(30) Priority: 18.02.2025 KR 20250021022
(71) Applicant: SAMSUNG SDI CO., LTD., Yongin-si, Gyeonggi-do 17084 (KR)
(72) Inventor: YOUN, Junseong, 17084 Yongin-Si, Gyeonggi-do (KR); KIM, Donghui, 17084 Yongin-Si, Gyeonggi-do (KR)
(74) Representative: Gulde & Partner

(57) **Abstract**

An electrode assembly may include a first electrode having a first electrode tab, a second electrode disposed on the first electrode and having a second electrode tab, a first pass electrode disposed on the second electrode and having a first pass electrode tab electrically connected to the first electrode tab, and a separator disposed between the first electrode and the second electrode or between the second electrode and the first pass electrode.

## Description

### BACKGROUND

### Field

The present disclosure relates to an electrode assembly and a secondary battery including the same.

### Description of the Related Art

Unlike primary batteries, which are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Various research and development efforts are in progress for the weight reduction, cost reduction, safety, and energy density improvement of secondary batteries. Traditionally, electrode substrates made of metal are heavy; therefore, recently, multilayer substrates or composite substrates including thin metal layers formed on both surfaces of a lightweight material (such as PET) are being used. However, in a multilayer substrate, an additional metal substrate is welded to the thin metal layers on both surfaces of the insulating layer to provide electrical conduction, which may result in quality degradation due to the welding process.

The above information disclosed in this Background section is for enhancement of understanding of the background of the present disclosure, and, therefore, it may contain information that does not constitute related (or prior) art.

### SUMMARY

The present disclosure provides an electrode assembly and a secondary battery including the same according to the independent claims.

Various aspects and features of the present disclosure will be described in, or will be apparent from, the following description of embodiments of the present disclosure.

Some embodiments of the present disclosure may include an electrode assembly including a first electrode having a first electrode tab, a second electrode disposed on the first electrode and having a second electrode tab, a first pass electrode disposed on the second electrode and having a first pass electrode tab electrically connected to the first electrode tab, and a separator disposed between the first electrode and the second electrode or between the second electrode and the first pass electrode.

In some embodiments, the first electrode may include a first insulation layer, first metal layers formed on two surfaces of the first insulation layer, and a first active material layer formed on a region of the first metal layers. The first electrode tab may be a region of the first metal layers where the first active material layer may be not formed.

In some embodiments, the first pass electrode may include a first metal substrate and first active material layers formed on two surfaces of the first metal substrate. The first pass electrode tab may be a region of the first metal substrate where the first active material layer may be not formed.

In some embodiments, a length of the first pass electrode tab may be greater than a length of the first electrode tab.

In some embodiments, a plurality of first pass electrodes may be alternately stacked with a plurality of first electrodes in a one to one ratio.

In some embodiments, a plurality of first pass electrodes may be alternately stacked with a plurality of first electrodes in a one to many ratio.

In some embodiments, the plurality of first electrodes may have first electrode tabs with lengths being different from one another.

In some embodiments, the electrode assembly may further include a first lead tab electrically connected to the first pass electrode tab and to the first electrode tab.

In some embodiments, the first lead tab, the first pass electrode tab, and the first electrode tab may be welded together while overlapping with one another.

In some embodiments, the second electrode may include a second insulation layer, second metal layers formed on two surfaces of the second insulation layer, and a second active material layer formed on a region of the second metal layers. The second electrode tab may be a region of the second metal layers where the second active material layer may be not formed.

In some embodiments, the electrode assembly may further include a second pass electrode disposed on the first pass electrode and a second pass electrode tab electrically connected to the second electrode tab.

In some embodiments, the second pass electrode may include a second metal substrate and second active material layers formed on two surfaces of the second metal substrate. The second pass electrode tab may be a region of the second metal substrate where the second active material layer may be not formed.

In some embodiments, a length of the second pass electrode tab may be greater than a length of the second electrode tab.

In some embodiments, a plurality of second pass electrodes may be stacked alternately with a plurality of second electrodes in a one-to-one ratio or a one-to-many ratio.

In some embodiments, the electrode assembly may further include a second lead tab electrically connected to the second pass electrode tab and to the second electrode tab.

In some embodiments, the second lead tab, the second pass electrode tab, and the second electrode tab may be welded together while overlapping with one another.

Some embodiments of the present disclosure may include secondary battery including an electrode assembly and a case accommodating the electrode assembly. The electrode assembly may include a first electrode including a first electrode tab, a second electrode disposed on the first electrode and including a second electrode tab, a first pass electrode disposed on the second electrode and including a first pass electrode tab electrically connected to the first electrode tab, and a separator disposed between the first electrode and the second electrode or between the second electrode and the first pass electrode.

In some embodiments, the first electrode may include a first insulation layer, a first metal layer formed on two surfaces of the first insulation layer, and a first active material layer formed on a region of the first metal layer. The first electrode tab may be on a region of the first metal layer where the first active material layer may be not formed.

In some embodiments, the first pass electrode may include a first metal substrate and a first active material layer formed on two sides of the first metal substrate. The first pass electrode tab may be an area where the first active material layer may be not formed on the first metal substrate.

In some embodiments, the secondary battery may further include an electrode terminal disposed through the case, an insulator disposed between the electrode terminal and the case and electrically insulating the electrode terminal from the case, a first lead tab coupled to the first pass electrode tab and to the first electrode tab and electrically connected to the case, and a second lead tab coupled to the second electrode tab and electrically connected to the electrode terminal.

According to some embodiments of the present disclosure, in the electrode assembly, the electrode that includes an insulation layer and the pass electrode that includes a metal substrate may be stacked, and a current path may be formed by coupling the electrode tab of the electrode and the pass electrode tab of the pass electrode.

According to some embodiments of the present disclosure, in the electrode assembly, the electrode tabs, the pass electrode tabs, and the lead tabs may be overlapped and simultaneously joined by laser welding or ultrasonic welding, thereby simplifying the manufacturing process.

Through the aforementioned embodiments, conductivity of the electrode assembly is improved, in particular without the necessity of additional reinforcement. Thereby, safety is improved, weight is reduced and additional manufacturing processes may be omitted.

However, the aspects and features of the present disclosure are not limited to those described above, and other aspects and features not mentioned will be clearly understood by a person skilled in the art from the Detailed Description below.

### BRIEF DESCRIPTION OF THE DRAWINGS

The accompanying drawings illustrate some embodiments of the present disclosure and, together with the Detailed Description, serve to explain some aspects and features of the present disclosure. Therefore, the present disclosure should not be construed as being limited to the drawings.
FIG. 1 is an exploded perspective view illustrating an electrode assembly according to some embodiments of the present disclosure.
FIG. 2 is a perspective view illustrating a first electrode in the electrode assembly of FIG. 1 in some embodiments of the present disclosure.
FIG. 3 is a perspective view illustrating a first pass electrode in the electrode assembly of FIG. 1 in some embodiments of the present disclosure.
FIG. 4 is a perspective view illustrating a first lead tab and a second lead tab, which are disposed in the electrode assembly of FIG. 1, in some embodiments of the present disclosure.
FIG. 5 is a partial side view illustrating a first pass electrode, a first electrode, and a first lead tab, which are disposed in the electrode assembly of FIG. 1, in some embodiments of the present disclosure.
FIG. 6 is a partial side view illustrating a first pass electrode, a first electrode, and a first lead tab, which are combined in the electrode assembly of FIG. 1, in some embodiments of the present disclosure.
FIG. 7 is an exploded perspective view illustrating an electrode assembly according to some embodiments of the present disclosure.
FIG. 8 is a perspective view illustrating a first lead tab and a second lead tab, which are disposed in the electrode assembly of FIG. 7, in some embodiments of the present disclosure.
FIG. 9 is a partial side view illustrating a first pass electrode, a first electrode, and a first lead tab, which are disposed in the electrode assembly of FIG. 7, in some embodiments of the present disclosure.
FIG. 10 is a partial side view illustrating a first pass electrode, a first electrode, and a first lead tab, which are combined in the electrode assembly of FIG. 7, in some embodiments of the present disclosure.
FIG. 11 is a partial side view illustrating a first pass electrode, a first electrode whose first electrode tabs have different lengths, and a first lead tab, which are disposed in the electrode assembly of FIG. 7, in some embodiments of the present disclosure.
FIG. 12 is a partial side view illustrating a first pass electrode, first electrodes whose first electrode tabs have different lengths, and a first lead tab, which are combined in the electrode assembly of FIG. 7, in some embodiments of the present disclosure.
FIG. 13 is an exploded perspective view illustrating an electrode assembly according to some embodiments of the present disclosure.
FIG. 14 is a perspective view illustrating a second electrode in the electrode assembly of FIG. 13 in some embodiments of the present disclosure.
FIG. 15 is a perspective view illustrating a second pass electrode in the electrode assembly of FIG. 13 in some embodiments of the present disclosure.
FIG. 16 is a perspective view illustrating a first lead tab and a second lead tab, which are disposed in the electrode assembly of FIG. 13, in some embodiments of the present disclosure.
FIG. 17 is a plan view illustrating a secondary battery according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value greater than or equal to 1.0 and a maximum value less than or equal to 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

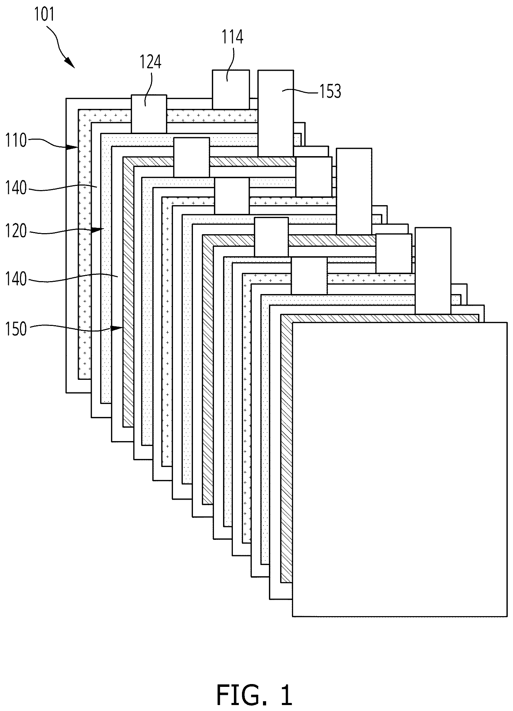

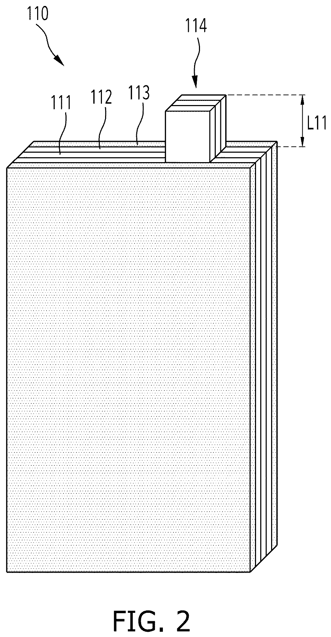

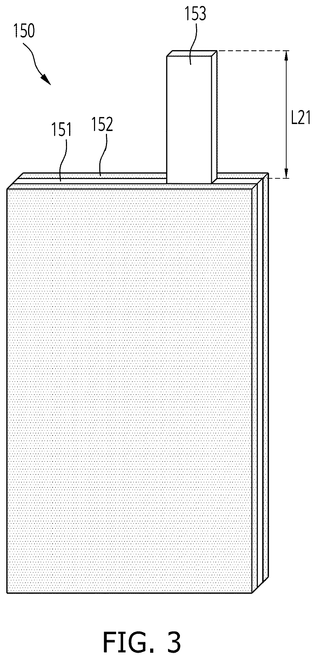

FIG. 1 illustrates an exploded perspective view of an electrode assembly according to some embodiments of the present disclosure. FIG. 2 illustrates a perspective view of a first electrode in the electrode assembly of FIG. 1 in some embodiments of the present disclosure. FIG. 3 illustrates a perspective view of a first pass electrode in the electrode assembly of FIG. 1 in some embodiments of the present disclosure.

The electrode assembly 101 may include a first electrode 110 including a first electrode tab 114, a second electrode 120 disposed on the first electrode 110 and including a second electrode tab 124, a first pass electrode 150 disposed on the second electrode 120 and including a first pass electrode tab 153 electrically connected to the first electrode tab 114, and a separator 140 disposed between the first electrode 110, the second electrode 120, and the first pass electrode 150.

In some embodiments, the first electrode 110 may include a first insulation layer 111 formed of an insulating material, first metal layers 112 formed on both surfaces of the first insulation layer 111, a first active-material layer 113 formed on a region of the first metal layers 112, and the first electrode tab 114 that is a region of the first metal layers 112 where the first active-material layer 113 is not formed.

The first insulation layer 111 may be made of a polymer material. For example, the first insulation layer 111 may be made of polyethylene terephthalate (PET) resin. However, a material of the first insulation layer 111 is not limited thereto and may be made of a polyester resin such as polytrimethylene terephthalate (PTT), polybutylene terephthalate (PBT), or polyethylene naphthalate (PEN).

The first metal layers 112 may include a metal material such as copper, a copper alloy, nickel, or a nickel alloy laminated or coated on the first insulation layer 111 or may include a metal material such as aluminum or an aluminum alloy.

The first electrode tab 114 may be cut so as to protrude to one side when the first electrode 110 is manufactured or may be formed to protrude farther than the separator 140 without a separate cutting process. In some embodiments, after forming the first metal layer 112 on both surfaces of the first insulation layer 111, the first electrode tab 114 may be formed through notching or the like.

When the first metal layer 112 functions as a positive electrode, the first active-material layer 113 may include a transition-metal oxide or the like; when the first metal layer 112 functions as a negative electrode, the first active-material layer 113 may include silicon, graphite, carbon, or the like. In some embodiments, the first active-material layer 113 is not coated onto the first electrode tab 114.

In some embodiments, the first electrode 110 may function as a negative electrode. The first metal layers 112 may include, for example, copper, a copper alloy, nickel, or a nickel alloy, and the first active-material layer 113 may include, for example, silicon, graphite, or carbon. Alternatively, the first electrode 110 may function as a positive electrode. When the first electrode 110 functions as a positive electrode, the first metal layers 112 may include, for example, aluminum or an aluminum alloy, and the first active-material layer 113 may include, for example, a transition-metal oxide.

When the first electrode 110 functions as a negative electrode, the second electrode 120 may function as a positive electrode. The second electrode 120 may be formed by applying a second electrode active material, such as a transition metal oxide, on a second electrode current collector formed of a metal foil, such as aluminum or an aluminum alloy. The second electrode 120 may include a second electrode tab 124 (e.g., a second uncoated portion) that is a region to which the second electrode active material is not applied. The second electrode tab 124 may act as a current flow path between the second electrode 120 and the second current collector. In some embodiments, the second electrode tab 124 may be cut in advance to protrude to another side (e.g., an opposite side) of the electrode assembly when the second electrode 120 is manufactured, or the second electrode 120 may protrude to the other side of the electrode assembly more than (e.g., farther than or beyond) the separator 140 without being separately cut.

When the first electrode 110 functions as a positive electrode, the second electrode 120 may function as a negative electrode. The second electrode 120 may be formed by applying a second electrode active material, such as graphite or carbon, to a second electrode current collector formed of a metal foil, such as copper, a copper alloy, nickel, or a nickel alloy. The second electrode 120 may include a second electrode tab 124 (e.g., a second uncoated portion) that is a region to which the second electrode active material is not applied. The second electrode tab 124 may act as a current flow path between the second electrode 120 and the second current collector. In some embodiments, when the second electrode 120 is manufactured, the second electrode tab 124 may be cut in advance to protrude to one side of the electrode assembly, or the second electrode tab 124 may protrude to one side of the electrode assembly more than (e.g., farther than or beyond) the separator 140 without being separately cut.

In some embodiments, the first electrode tab 114 may be located on the right side of the electrode assembly 101, and the second electrode tab 124 may be located on the left side of the electrode assembly 101. In other embodiments, the first electrode tab 114 and the second electrode tab 124 may be located on one side of the electrode assembly 101 in a same direction. For convenience of description, the left and right sides are defined according to the electrode assembly 101 as oriented in FIG. 1.

Although the first electrode tab 114 and the second electrode tab 124 are illustrated as protruding in the same direction in the drawings, the first electrode tab 114 and the second electrode tab 124 are not limited thereto and may protrude in different directions.

The separator 140 prevents a short circuit among the first electrode 110, the second electrode 120 and the first pass electrode 150 while allowing movement of lithium ions therebetween. The separator 140 may be made of, for example, a polyethylene film, a polypropylene film, a polyethylene-polypropylene film, or the like.

The first pass electrode 150 may be disposed on the second electrode 120, and the first pass electrode tab 153 may be electrically connected to the first electrode tab 114 to form a current path. In the first electrode 110, no current path is formed between the first metal layers 112 due to the first insulation layer 111 interposed therebetween. As the first pass electrode tab 153 is coupled to the first electrode tab 114, a current path may be formed between the first metal layers 112 on both surfaces of the first insulation layer 111. A length L21 of the first pass electrode tab 153 may be greater than a length L11 of the first electrode tab 114.

The first pass electrode 150 may include a first metal substrate 151, first active-material layers 152 formed on both surfaces of the first metal substrate 151, and the first pass electrode tab 153, which is a region of the first metal substrate 151 where the first active-material layer 152 is not formed.

The first pass electrode 150 may function with the same polarity as the first electrode 110. When the first electrode 110 functions as a positive electrode, the first pass electrode 150 may function as a positive electrode also. The first pass electrode 150 may include the first metal substrate 151 formed of a metal foil such as aluminum or an aluminum alloy, with the first active material layer 152 (which may include a transition-metal oxide or the like) applied thereon and may include the first pass electrode tab 153, which is a region where the first active material layer is not formed. The first pass electrode tab 153 may be coupled to the first lead tab together with the first electrode tab 114 to serve as a current path.

When the first electrode 110 functions as a negative electrode, the first pass electrode 150 may function as a negative electrode also. The first pass electrode 150 has a first metal substrate 151 formed of a metal foil such as copper, copper alloy, nickel, or nickel alloy, on which a first electrode active material such as silicon, graphite, or carbon is applied to form a first active material layer 152. The first pass electrode 150 may include a first pass electrode tab 153, which is an area where the first active material layer 152 is not formed. The first pass electrode tab 153 may be coupled to a first collector portion (first lead tab) together with the first electrode tab 114 to serve as a current path.

A plurality of first pass electrodes 150 may be alternately stacked with a plurality of first electrodes 110 in a one-to-one (1:1) ratio. Accordingly, as shown in FIG. 1, the plurality of first electrode tabs 114 and the plurality of first pass electrode tabs 153 may be alternately arranged. When the plurality of first electrode tabs 114 and the plurality of first pass electrode tabs 153 are overlapped, the first metal layers 112 on both surfaces of the first electrode tab 114 may be electrically connected to an adjacent pair of the first pass electrode tabs 153. A first pass electrode tab 153, which is formed relatively long, may first be electrically connected to the adjacent first electrode tab 114 and subsequently to another adjacent first pass electrode tab 153. Thus, a current path is formed through the first pass electrode tab 153, and the first metal layers 112 are electrically connected on both surfaces of the first electrode tab 114.

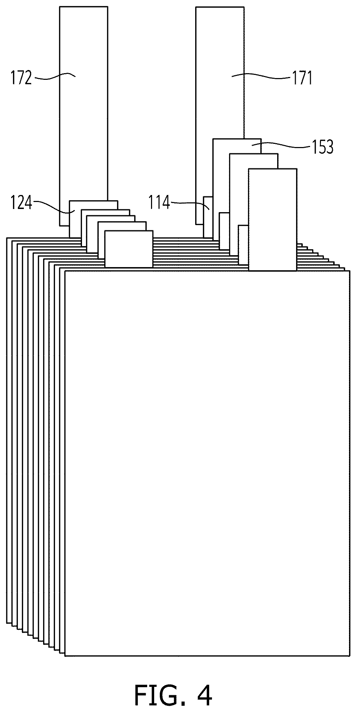

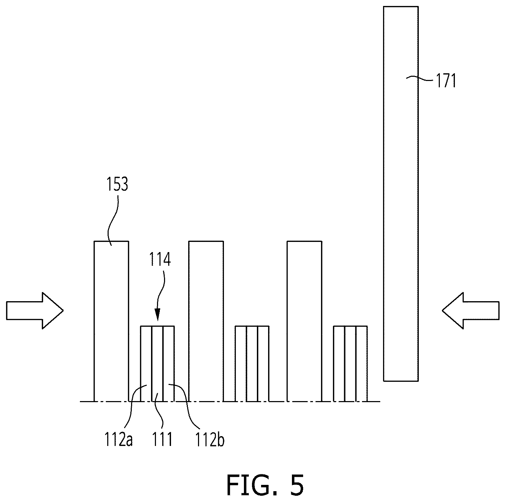

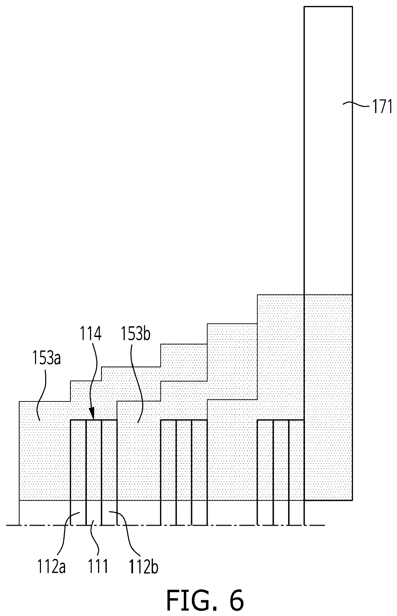

FIG. 4 is a perspective view illustrating a first lead tab and a second lead tab, which are disposed in the electrode assembly of FIG. 1, in some embodiments of the present disclosure. FIG. 5 is a partial side view illustrating a first pass electrode, a first electrode, and a first lead tab, which are disposed in the electrode assembly of FIG. 1, in some embodiments of the present disclosure. FIG. 6 is a partial side view illustrating a first pass electrode, a first electrode, and a first lead tab, which are combined in the electrode assembly of FIG. 1, in some embodiments of the present disclosure.

The electrode assembly may further include a first lead tab 171 electrically connected to the first pass electrode tab 153 and the first electrode tab 114. The first lead tab 171 may be coupled to a case or an electrode terminal provided in the case of the secondary battery accommodating the electrode assembly 101 to electrically connect the first electrode 110 to the case or the electrode terminal.

As shown in FIG. 5, the first lead tab 171 may be disposed on one side where the first pass electrode tab 153 and the first electrode tab 114 are arranged and may be welded to the first pass electrode tab 153 and the first electrode tab 114 while being overlapped therewith. Without a separate process of coupling the first electrode tab 114 and the first pass electrode tab 153, after stacking the first electrode 110 and the first pass electrode 150, the first lead tab 171, the first pass electrode tab 153, and the first electrode tab 114 may be simultaneously joined by laser welding or ultrasonic welding, thereby simplifying a manufacturing process of the electrode assembly.

As shown in FIG. 6, a 1-1th pass electrode tab 153a, which is formed to be longer than the first electrode tab 114, may surround an adjacent first electrode tab 114 while facing the 1-2th pass electrode tab 153b and may be coupled to the adjacent first electrode tab 114 together with the first lead tab 171. The first electrode tab 114 may include a 1-1th metal layer 112a formed on one surface of the first insulation layer 111 and a 1-2th metal layer 112b formed on the other surface of the first insulation layer 111. The 1-1th metal layer 112a may be electrically connected to the adjacent 1-1th pass electrode tab 153a, the 1-2th metal layer 112b may be electrically connected to the adjacent 1-2th pass electrode tab 153b, and the adjacent 1-1th pass electrode tab 153a and the adjacent 1-2th pass electrode tab 153b may be coupled to the first lead tab 171 to form a current path.

The electrode assembly may further include a second lead tab 172 electrically connected to the second electrode tab 124. The second lead tab 172 may be coupled to a case or an electrode terminal provided in the case of the secondary battery accommodating the electrode assembly 101 to electrically connect the second electrode 120 to the case or the electrode terminal. The second lead tab 172 may be joined to the plurality of second electrode tabs 124 by laser welding or ultrasonic welding.

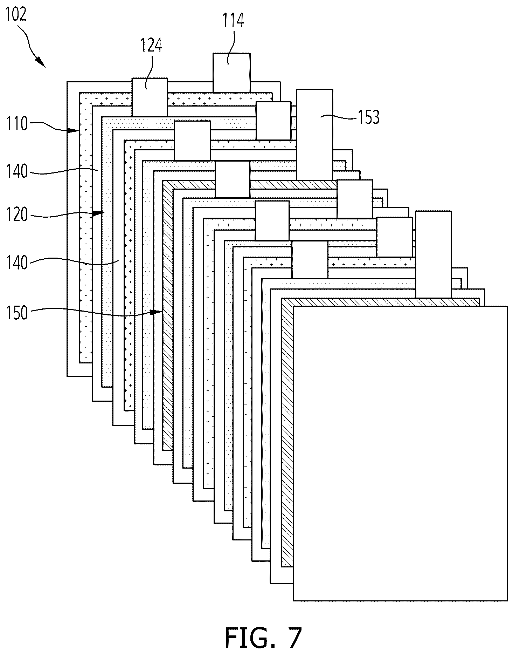

FIG. 7 is an exploded perspective view illustrating an electrode assembly according to some embodiments of the present disclosure.

An electrode assembly 102 may include a first electrode 110 with a first electrode tab 114, a second electrode 120 disposed on the first electrode 110 and including a second electrode tab 124, a first pass electrode 150 disposed on the second electrode 120 and including a first pass electrode tab 153 electrically connected to the first electrode tab 114, and a separator 140 disposed between the first electrode 110, the second electrode 120, and the first pass electrode 150. Additionally, a plurality of first pass electrodes 150 may be alternately stacked with a plurality first electrodes 110 in a one-to-many (1:N) ratio.

In some embodiments, as illustrated in FIG. 7, the first pass electrode 150 and the first electrode 110 may be stacked in a one-to-two (1:2) ratio (i.e., two first electrodes 110 may be stacked and then one first pass electrode 150 may be stacked). However, the first pass electrode 150 and the first electrode 110 are not limited to the above, and one first pass electrode 150 may be stacked after three or more first electrodes 110 are stacked. The quantity of first electrodes 110 can be limited to the extent that the first pass electrode 150 can form a path for current.

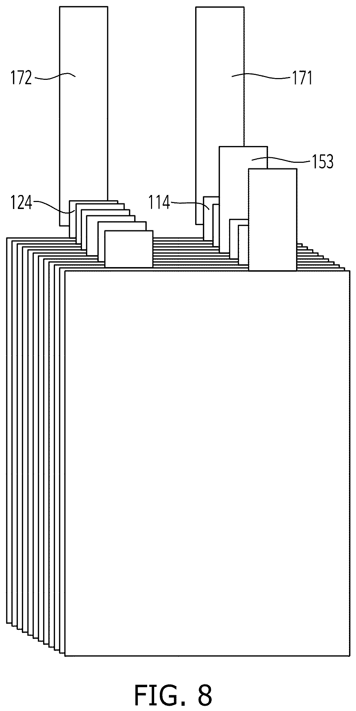

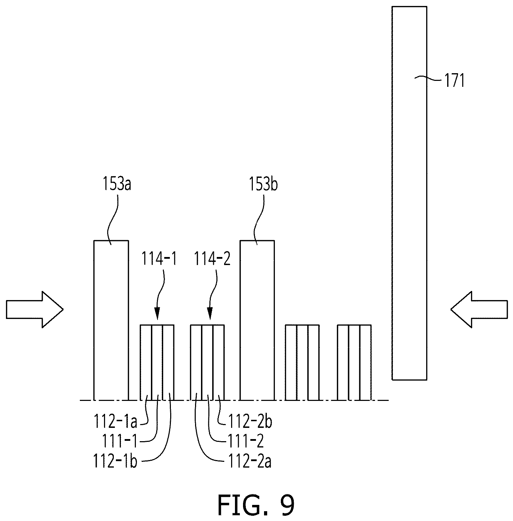

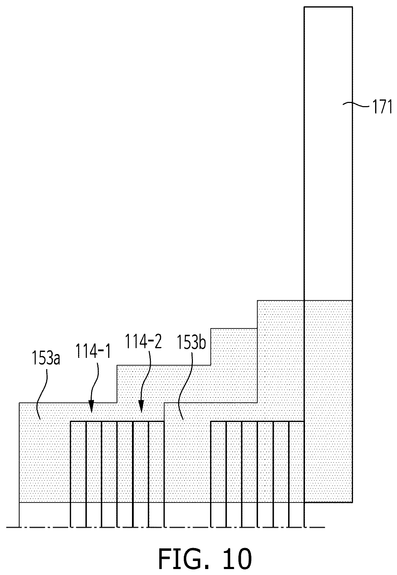

FIG. 8 is a perspective view illustrating a first lead tab and a second lead tab, which are disposed in the electrode assembly of FIG. 7, in some embodiments of the present disclosure. FIG. 9 is a partial side view illustrating a first pass electrode, a first electrode, and a first lead tab, which are disposed in the electrode assembly of FIG. 7, in some embodiments of the present disclosure. FIG. 10 is a partial side view illustrating a first pass electrode, a first electrode, and a first lead tab, which are combined in the electrode assembly of FIG. 7, in some embodiments of the present disclosure.

Referring to FIGS. 8-10, a first lead tab 171 electrically connected to the first pass electrode tab 153 and the first electrode tab 114 may be further included. The first lead tab 171 may be coupled to a case or an electrode terminal of the secondary battery accommodating the electrode assembly 102 to electrically connect the first electrode 110 to the case or the electrode terminal.

The first lead tab 171 may be disposed on one side where the first pass electrode tab 153 and the first electrode tab 114 are arranged and may be laser welded or ultrasonic welded to the first pass electrode tab 153 and the first electrode tab 114. Thus, by simultaneously laser welding or ultrasonic welding the first lead tab 171, the first pass electrode tab 153, and the first electrode tab 114 without a separate process, a manufacturing process of the electrode assembly may be simplified.

In some embodiments, when the first pass electrode and the first electrode are stacked in a one-to-two (1:2) ratio, a 1-1th pass electrode tab 153a and a neighboring 1-2th pass electrode tab 153b may have a 1-1th electrode tab 114-1 and a 1-2th electrode tab 114-2 disposed between the 1-1th pass electrode tab 153a and the neighboring 1-2th pass electrode tab 153b.

The 1-1th pass electrode tab 153a, the 1-1th electrode tab 114-1, the 1-2th electrode tab 114-2, and the 1-2th pass electrode tab 153b may be overlapped and simultaneously joined to the first lead tab 171 through laser welding or ultrasonic welding. The 1-1th pass electrode tab 153a surrounds the 1-1th electrode tab 114-1 and the 1-2th electrode tab 114-2 and may be coupled to the facing 1-2th pass electrode tab 153b along with the first lead tab 171.

The 1-1th electrode tab 114-1 may include a 1-11th metal layer 112-1a formed on one surface of a 1-1th insulation layer 111-1 and a 1-12th metal layer 112-1b formed on the other surface of the 1-1th insulation layer 111-1. The electrode tab 114-2 may include a 1-21th metal layer 112-2a formed on one surface of a 1-2th insulation layer 111-2 and a 1-22th metal layer 112-2b formed on the other surface of the 1-2th insulation layer 111-2.

The 1-11th metal layer 112-1a of the electrode tab 114-1 may be electrically connected to the adjacent 1-1th pass electrode tab 153a, and the 1-22th metal layer 112-2b of the electrode tab 114-2 may be electrically connected to the adjacent 1-2th pass electrode tab 153b. The 1-12th metal layer 112-1b of the 1-1th electrode tab 114-1 is coupled with the 1-21th metal layer 112-2a of the 1-2th electrode tab 114-2, and can be electrically connected to the 1-1th pass electrode tab 153a, which wraps around ends of the 1-1th electrode tab 114-1 and the 1-2th electrode tab 114-2. During welding, at least a portion of the metal layers or the pass electrode tabs may be melted by welding heat and may be electrically connected to one another.

The two first electrode tabs disposed between the pass electrode tab 153b and the first lead tab 171 may be electrically connected to the first lead tab 171 as the 1-2th pass electrode tab 153b surrounds ends of the two first electrode tabs.

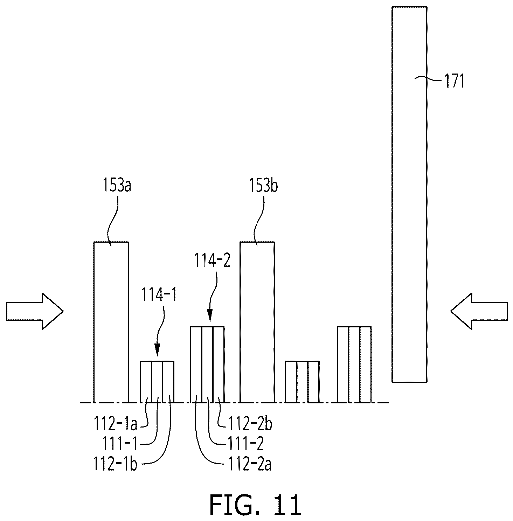

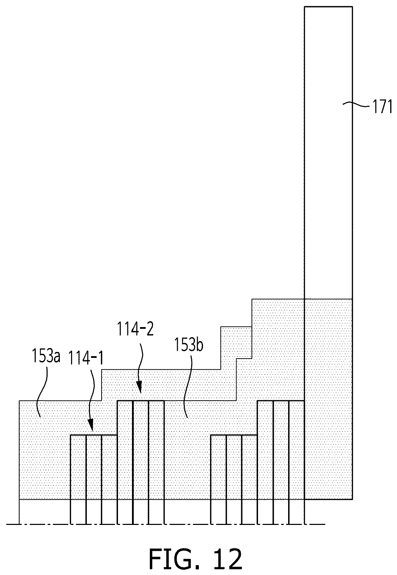

FIG. 11 is a partial side view illustrating a first pass electrode, first electrodes whose first electrode tabs have different lengths, and a first lead tab, which are disposed in the electrode assembly of FIG. 7, in some embodiments of the present disclosure. FIG. 12 is a partial side view illustrating a first pass electrode, first electrodes whose first electrode tabs have different lengths, and a first lead tab, which are combined.

When the plurality of first pass electrodes and the plurality of first electrodes is alternately stacked in a one-to-many (1:N) ratio, lengths of the first electrode tabs in the plurality of first electrodes may be different from one another.

In some embodiments, when the first pass electrode and the first electrode are laminated in a one-to-two (1:2) ratio, the 1-1th pass electrode tab 153a and the neighboring 1-2th pass electrode tab 153b may have the 1-1th electrode tab 114-1 and the 1-2th electrode tab 114-2 disposed therebetween, and a length of the 1-1th electrode tab 114-1 may be shorter than a length of the 1-2th electrode tab 114-2.

The 1-1th pass electrode tab 153a, the 1-1th electrode tab 114-1, the 1-2th electrode tab 114-2, and the 1-2th pass electrode tab 153b may be overlapped and simultaneously welded to the first lead tab 171 by laser welding or ultrasonic welding. The 1-1th pass electrode tab 153a may be coupled to the first lead tab 171 along with the 1-2th pass electrode tab 153b facing the 1-1th pass electrode tab 153a while wrapping around the 1-1th electrode tab 114-1 and the 1-2th electrode tab 114-2.

The electrode tab 114-1 may include the 1-11th metal layer 112-1a, which is formed on one side of the 1-1th insulation layer 111-1, and the 1-12th metal layer 112-1b, which is formed on the other side of the 1-1th insulation layer 111-1. The electrode tab 114-2 may include the 1-21th metal layer 112-2a, which is formed on one side of the 1-2th insulation layer 111-2, and the 1-22th metal layer 112-2b, which is formed on another side of the 1-2th insulation layer 111-2.

The 1-11th metal layer 112-1a of the electrode tab 114-1 may be combined with the adjacent 1-1th pass electrode tab 153a and electrically connected, while the 1-22th metal layer 112-2b of the 1-2th electrode tab 114-2 may be combined with the adjacent 1-2th pass electrode tab 153b to be electrically connected. The 1-12th metal layer 112-1b of the 1-1th electrode tab 114-1 may be combined with the 1-21th metal layer 112-2a of the 1-2th electrode tab 114-2. The 1-21th metal layer 112-2a of the 1-2th electrode tab 114-2, which is longer than the 1-1th electrode tab 114-1, may be combined with the 1-1th pass electrode tab 153a to be electrically connected. Particularly, a part of the 1-21th metal layer 112-2a of the 1-2th electrode tab 114-2 may be combined with the 1-12th metal layer 112-1b of the 1-1th electrode tab 114-1, and a remaining portion of the 1-21th metal layer 112-2a may be combined with the 1-1th pass electrode tab 153a to be electrically connected.

The two first electrode tabs disposed between the pass electrode tab 153b and the first lead tab 171 can be electrically connected to the first lead tab 171 as the 1-2th pass electrode tab 153b surrounds ends of the two first electrode tabs and is coupled to the first lead tab 171.

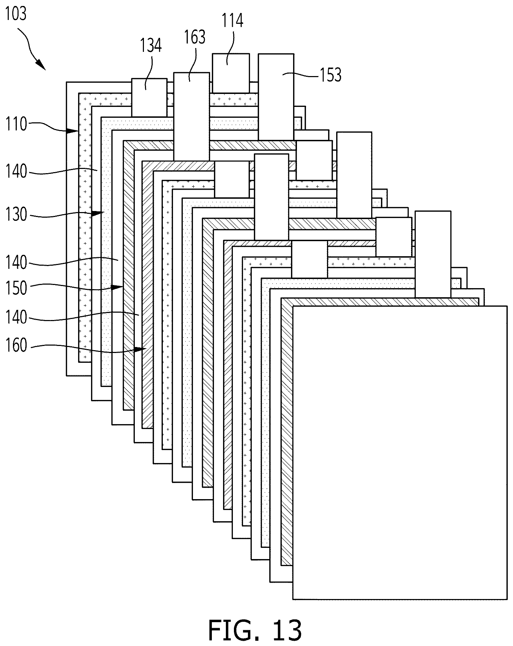

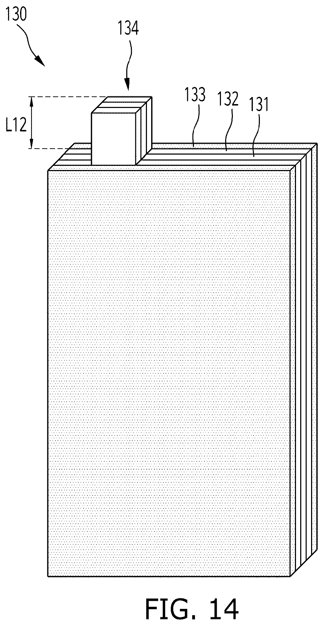

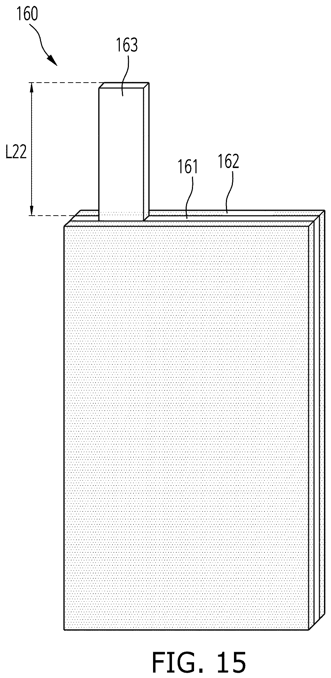

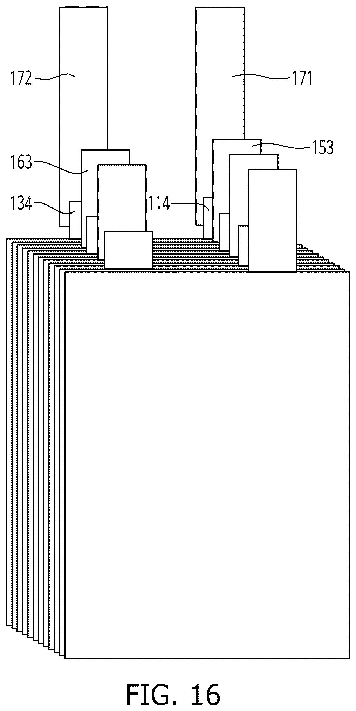

FIG. 13 is an exploded perspective view illustrating an electrode assembly according to some embodiments of the present disclosure. FIG. 14 is a perspective view illustrating a second electrode in the electrode assembly of FIG. 13 in some embodiments of the present disclosure. FIG. 15 is a perspective view illustrating a second pass electrode in the electrode assembly of FIG. 13 in some embodiments of the present disclosure. FIG. 16 is a perspective view illustrating a first lead tab and a second lead tab, which are disposed in the electrode assembly of FIG. 13, in some embodiments of the present disclosure.

Referring to FIGS. 13 to 16, an electrode assembly 103 may include the first electrode 110 including a first electrode tab 114, a second electrode 130 disposed on the first electrode 110 and including a second electrode tab 134, the first pass electrode 150 disposed on the second electrode 130 and including the first pass electrode tab 153 electrically connected to the first electrode tab 114; a second pass electrode 160 disposed on the first pass electrode 150 and including a second pass electrode tab 163 electrically connected to the second electrode tab 134; and the separator 140 disposed among the first electrode 110, the second electrode 130, the first pass electrode 150, and the second pass electrode 160. The first electrode 110, the first pass electrode 150, and the separator 140 may be the same as or similar to first electrodes, first pass electrodes, and separators described above.

In some embodiments, the second electrode 130 may include: a second insulation layer 131, second metal layers 132 formed on both surfaces of the second insulation layer 131, a second active-material layer 133 formed on a region of the second metal layers 132, and the second electrode tab 134 that is a region of the second metal layers 132 where the second active-material layer 133 is not formed.

The second insulation layer 131 may be made of a polymer material. For example, the second insulation layer 131 may be made of polyethylene terephthalate (PET) resin. However, a material of the second insulation layer 131 is not limited thereto and may be made of polyester resins such as polytrimethylene terephthalate (PTT), polybutylene terephthalate (PBT), or polyethylene naphthalate (PEN).

The second metal layers 132 may be formed of a metal material such as copper, a copper alloy, nickel, or a nickel alloy, or may be formed of a metal material such as aluminum or an aluminum alloy, on the second insulation layer 131.

The second electrode tab 134 may be pre-cut to protrude to one side when the second electrode 130 is manufactured or may be formed to protrude farther than the separator 140 without cutting. In some embodiments, the second electrode tab 134 may be formed by notching after the second metal layers 132 are formed on both surfaces of the second insulation layer 131.

When the second metal layers 132 function as a positive electrode, the second active-material layer 133 may include a transition-metal oxide. When the second metal layers 132 function as a negative electrode, the second active-material layer 133 may include silicon, graphite, or carbon. The second active-material layer 133 is not applied to the second electrode tab 134.

In some embodiments, when the first electrode 110 functions as a positive electrode, the second electrode 130 may function as a negative electrode. The second metal layer 132 may include copper, a copper alloy, nickel, or a nickel alloy, and the second active material layer 133 may include silicon, graphite, or carbon. Alternatively, when the first electrode 110 functions as a negative electrode, the second electrode 130 may function as a positive electrode. And the second metal layer 132 may include aluminum or an aluminum alloy, and the second active material layer 133 may include, for example, a transition-metal oxide.

The second pass electrode 160 may be disposed on the first pass electrode 150, and the second pass electrode tab 163 may be electrically connected to the second electrode tab 134 to form a current path. The second electrode 130 does not form a current path between the second metal layers 132 due to the second insulation layer 131 interposed therebetween. As the second pass electrode tab 163 is coupled to the second electrode tab 134, a current path may be formed between the second metal layers 132 on both surfaces of the second insulation layer 131. For this purpose, a length L22 of the second pass electrode tab 163 may be greater than a length L 12 of the second electrode tab 134.

In some embodiments, the second pass electrode 160 may include a second metal substrate 161, second active-material layers 162 formed on both surfaces of the second metal substrate 161, and the second pass electrode tab 163, which is a region of the second metal substrate 161 where the second active-material layer 162 is not formed.

The second pass electrode 160 may function with a same polarity as the second electrode 130. When the second electrode 130 functions as a positive electrode, the second pass electrode 160 may also function as a positive electrode. The second pass electrode 160 may include the second metal substrate 161 formed of a metal foil such as aluminum or an aluminum alloy, the second active-material layer 162 including a transition-metal oxide or the like, and the second pass electrode tab 163. The second pass electrode tab 163 may be coupled to the second lead tab together with the second electrode tab 134 to serve as a current path.

When the second electrode 130 functions as a negative electrode, the second pass electrode 160 may also function as a negative electrode. The second pass electrode 160 may include the second metal substrate 161 formed of a metal foil such as copper, a copper alloy, nickel, or a nickel alloy, with a second active material layer 162 including silicon, graphite, or carbon applied thereon. The second pass electrode may include a second pass electrode tab 163, which is a region where the second active material layer 162 is not formed. The second pass electrode tab 163 may be coupled to the second lead tab together with the second electrode tab 134 to serve as a current path.

A plurality of second pass electrodes 160 may be alternately stacked with a plurality of second electrodes 130 in a one-to-one ratio. Accordingly, as shown in FIG. 13, a plurality of second electrode tabs 134 and a plurality of second pass electrode tabs 163 may be alternately arranged. When the plurality of second electrode tabs 134 and the plurality of second pass electrode tabs 163 overlap, the second metal layers 132 on both surfaces of the second electrode tab 134 may be electrically connected to an adjacent pair of the second pass electrode tabs 163. A relatively long second pass electrode tab 163 may be electrically connected to the adjacent second electrode tab 134 and then to another adjacent second pass electrode tab 163, thereby forming a current path through the second pass electrode tab 163 and electrically connecting the second metal layers 132 on both surfaces of the second electrode tab 134. Although not shown in the drawings, the plurality of second pass electrodes 160 may be alternately stacked with the plurality of second electrodes 130 in a one-to-many (1:N) ratio.

Referring to FIG. 16, the electrode assembly may further include the first lead tab 171 electrically connected to the first pass electrode tab 153 and the first electrode tab 114 and may include the second lead tab 172 electrically connected to the second pass electrode tab 163 and the second electrode tab 134.

The first lead tab 171 may be disposed on one side of the electrode assembly where the first pass electrode tab 153 and the first electrode tab 114 are arranged and may be welded to the first pass electrode tab 153 and the first electrode tab 114. The second lead tab 172 may be disposed on another side of the electrode assembly where the second pass electrode tab 163 and the second electrode tab 134 are arranged and may be welded to the second pass electrode tab 163 and the second electrode tab 134.

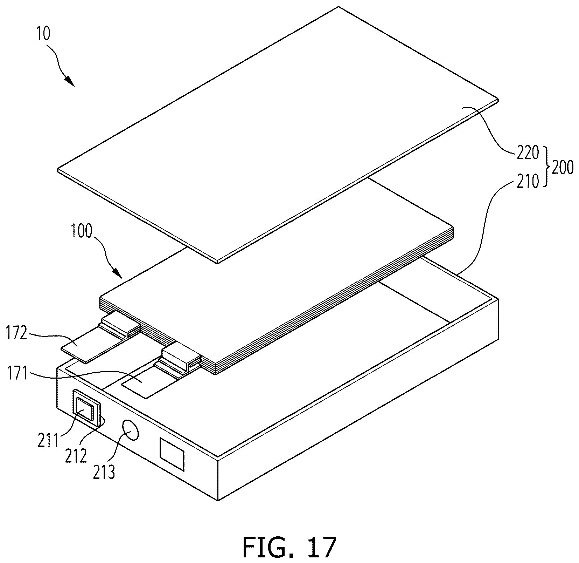

FIG. 17 is a plan view illustrating a secondary battery according to some embodiments of the present disclosure.

Referring to FIG. 17, a secondary battery 10 according to some embodiments of the present disclosure may include the electrode assembly 100 and a case 200 accommodating the electrode assembly 100.

In some embodiments, the case 200 may include a case body 210 into which the electrode assembly 100 is inserted through an open side, and a case cover 220 coupled to the open side of the case body 210.

The case body 210 may provide an overall exterior of the secondary battery 10 and may be formed of stainless use steel (SUS). However, the case body 210 is not limited thereto and may be formed of a conductive metal such as aluminum, an aluminum alloy, or steel plated with nickel.

One side of the case body 210 may be open so that the electrode assembly 100 may be accommodated in the case body 210. The open side of the case body 210 may be sealed by the case cover 220.

The case body 210 may include an electrode terminal 211 disposed through the case body 210. The electrode terminal 211 may be electrically coupled to the second lead tab 172 electrically connected to the second electrode of the electrode assembly 100. An insulator 212 may be disposed between the electrode terminal 211 and the case body 210 to electrically insulate the electrode terminal 211 from the case body 210. The first lead tab 171 electrically connected to the first electrode of the electrode assembly 100 may be coupled to the case body 210. Another electrode terminal for coupling with the first lead tab 171 may additionally be provided on the case body 210.

In some embodiments, when the case body 210 functions as a negative terminal and the electrode terminal 211 functions as a positive terminal, the electrode terminal 211 may function as the positive terminal while being insulated from the case body 210 by the insulator 212.

A filling hole 213 may be formed in the case body 210 to inject an electrolyte. The filling hole 213 may be formed adjacent to the electrode terminal 211; however, in other embodiments, a position of the filling hole 213 is not limited thereto.

The electrode assembly 100 may be any one of the electrode assembly 101, the electrode assembly 102, and the electrode assembly 103 described with reference to FIGS. 1 to 16.

Although the present disclosure has been described with reference to embodiments and drawings illustrating aspects thereof, the present disclosure is not limited thereto. Various modifications and variations can be made by a person skilled in the art to which the present disclosure belongs.

### DESCRIPTION OF SOME REFERENCE SYMBOLS

10: secondary battery
100-103: electrode assembly
110: first electrode
114: first electrode tab
120, 130: second electrode
124, 134: second electrode tab
140: separator
150: first pass electrode
153: first pass electrode tab
160: second pass electrode
163: second pass electrode tab
171: first lead tab
172: second lead tab
200: case

## Claims

1. An electrode assembly (101, 102, 103) comprising:
a first electrode (110) including a first electrode tab (114);
a second electrode (120, 130) disposed on the first electrode (110) and including a second electrode tab (124, 134);
a first pass electrode (150) disposed on the second electrode (120, 130) and including a first pass electrode tab (153) electrically connected to the first electrode tab (114); and
a separator (140) disposed between the first electrode (110) and the second electrode (120, 130) and another separator (140) disposed between the second electrode (120, 130) and the first pass electrode (150).

2. The electrode assembly (101, 102, 103) according to claim 1, wherein the first electrode (110) includes:
a first insulation layer (111);
first metal layers (112) formed on two surfaces of the first insulation layer (111); and
a first active-material layer (113) formed on a region of the first metal layers (112), and
wherein the first electrode tab (114) is a region of the first metal layers (112) where the first active-material layer (113) is not formed.

3. The electrode assembly (101, 102, 103) according to claim 1 or 2, wherein the first pass electrode (150) includes:
a first metal substrate (151); and
first active-material layers (152) formed on two surfaces of the first metal substrate (151), and
wherein the first pass electrode tab (153) is a region of the first metal substrate (151) where the first active-material layer (152) is not formed.

4. The electrode assembly (101, 102, 103) according to any one of the preceding claims, wherein a length of the first pass electrode tab (153) is greater than a length of the first electrode tab (114).

5. The electrode assembly (101, 103) according to any one of the preceding claims, wherein a plurality of first pass electrodes (150) is alternately stacked with a plurality of first electrodes (110) in a one-to-one ratio.

6. The electrode assembly (102) according to any one of claims 1 to 4, wherein a plurality of first pass electrodes (150) is alternately stacked with a plurality of first electrodes (110) in a one-to-many ratio.

7. The electrode assembly (102) according to claim 6, wherein the plurality of first electrodes (110) has first electrode tabs (114) with lengths being different from one another.

8. The electrode assembly (101, 102, 103) according to any one of the preceding claims, further comprising a first lead tab (171) electrically connected to the first pass electrode tab (153) and to the first electrode tab (114).

9. The electrode assembly (101, 102, 103) according to claim 8, wherein the first lead tab (171), the first pass electrode tab (153), and the first electrode tab (114) are welded together while overlapping with one another.

10. The electrode assembly (103) according to any one of the preceding claims, wherein the second electrode (130) includes:
a second insulation layer (131);
second metal layers (132) formed on two surfaces of the second insulation layer (131); and
a second active-material layer (133) formed on a region of the second metal layers (132), and
wherein the second electrode tab (134) is a region of the second metal layers (132) where the second active-material layer (133) is not formed.

11. The electrode assembly (103) according to any one of the preceding claims, further comprising:
a second pass electrode (160) disposed on the first pass electrode (150); and
a second pass electrode tab (163) electrically connected to the second electrode tab (134).

12. The electrode assembly (103) according to claim 11, wherein the second pass electrode (160) includes:
a second metal substrate (161); and
second active-material layers (162) formed on two surfaces of the second metal substrate (161), and
wherein the second pass electrode tab (163) is a region of the second metal substrate (161) where the second active-material layer (162) is not formed.

13. The electrode assembly (103) according to claim 11 or 12, wherein a length of the second pass electrode tab (163) is greater than a length of the second electrode tab (134).

14. A secondary battery (10) comprising:
an electrode assembly (100); and
a case (200) accommodating the electrode assembly (100),
wherein the electrode assembly (100) is an electrode assembly (101, 102, 103) according to any one of claims 1 to 13.

15. The secondary battery (10) according to claim 14, further comprising:
an electrode terminal (211) disposed through the case (200);
an insulator (212) disposed between the electrode terminal (211) and the case (200) and electrically insulating the electrode terminal (211) from the case (200);
a first lead tab (171) coupled to the first pass electrode tab (153) and to the first electrode tab (114) and electrically connected to the case (200); and
a second lead tab (172) coupled to the second electrode tab (124, 134) and electrically connected to the electrode terminal (211).
